# EUROPEAN PATENT SPECIFICATION

(11) **EP 0 805 708 B1**
(45) Date of publication and mention of the grant of the patent: **28.03.2007**
(21) Application number: 96905240.6
(22) Date of filing: 25.01.1996
(51) Int. Cl.: A63B 22/04, A63B 69/16, A63B 23/04

(54) **STATIONARY EXERCISE APPARATUS**
FESTSTEHENDES ÜBUNGSGERÄT
EXERCISEUR FIXE

(30) Priority: 25.01.1995 US 377846; 19.04.1995 US 426467; 06.06.1995 US 467596; 30.06.1995 US 497612; 17.07.1995 US 503301
(43) Date of publication of application: 12.11.1997
(73) Proprietor: Nautilus, Inc., Vancouver, WA 98683 (US)
(72) Inventor: Rodgers, Robert E. Jr., Canyon Lake TX 78133 (US)
(74) Representative: Miller, James Lionel Woolverton
(86) International application number: PCT/US1996/001101
(87) International publication number: WO 1996/022814

(56) References cited:
- WO-A-94/12244
- DE-A- 2 919 494
- US-A- 219 439
- US-A- 3 316 898
- US-A- 4 188 030
- US-A- 4 786 050
- US-A- 4 869 494
- US-A- 5 242 343
- US-A- 5 279 529
- US-A- 5 290 211
- US-A- 5 352 169
- US-A- 5 383 829
- US-A- 5 401 226
- US-A- 5 423 729

## Description

### Background of the Invention

### 1. Field of the Invention

The present invention relates to an improved stationary exercising apparatus. More particularly, the invention relates to improved exercising apparatus which enables a user to move his feet in a predetermined closed path, for example, an elliptical path, which more accurately representing the body motion associated with climbing stairs or an inclined ramp, and also relates to a crank assembly for an exercising device which enables the user to move his feet and/or arms in a predetermined closed path. The invention further relates to an improved exercising apparatus which enables the user to move his feet in an elliptical path while foot platforms remain substantially parallel with a reference plane through at least a portion of the lower half of an elliptical path.

### 2. Description of the Prior Art

Stair climbing is a popular form of exercise for the cardiovascular system. However, it can over prolonged use overstress the knees. Walking is also a popular form of exercise but it does not load the cardiovascular system to the extent stair climbing does. Therefore, the need exists for an improved stationary exercising device which will load the cardiovascular system as stair climbing does but does not overload or unduly stress the knees and other joints. Prior art stair climbing devices have two common draw backs. First, they require excessive lifting of the knees or an exaggerated vertical movement of the lower legs. See, for example, U.S. Patents Nos. 3,316,898; 4,949,993; 4,989,857; and 5,135,477. Alternatively, the devices which do tend to promote a more natural movement of the knees and ankles are difficult to ascend and descend because of the configuration of the devices. See, for example, U.S. Patent No. 5,242,343. Additionally, while certain prior art devices have attempted to imitate a more natural movement of the knees or ankles, they have filed to provide an accurate simulation. See, for example, U.S. patent Nos. 5,242,343 and 5,383,829. In the U.S. patent No.5,383,829, on which the two-part form of independent claim 1 is based, foot pads are directly attached to reciprocating members and therefore the foot pad motion and angular orientation must be the same as the reciprocating members.

Hence, the need exists for an improved stationary exercise device which promotes the movements of the feet, ankles and legs in a more natural and rhythmic motion. In addition, the need exists for a more rhythmic movement of the hand motions in combination with a stair climbing exercise to accelerate a cardiovascular workout and exercise the upper body muscle groups without unduly overstressing the elbows and shoulders. Thus, the need exists for an improved stationary exercise device which can combine the movements of the feet and hands in a more natural and rhythmic motion.

### Summary of the Invention

Briefly, the invention, as defined in independent claim 1, relates to an improved stationary exercising device. A frame is provided which includes a base portion adapted to be supported by the floor, a mid portion and a top portion. A coupling member is attached to the frame which includes a pulley defining a pivot axis. Two reciprocating members are positioned in spaced relationship to the base portion of the frame. One end of each reciprocating member is adapted for linear movement substantially parallel with the floor. That end of each of the reciprocating member being linearly displaced may contact the base portion or it may slide directly on the floor. The other end of each reciprocating member is attached, directly or indirectly, to the pulley of the coupling member. In this manner, rotation of the pulley rotates one end of each reciprocating member in a circular motion while the other end of each reciprocating member moves in a linear manner. Means are also included for orienting the bottom of each foot of the user so that each foot follows a closed path, preferably a substantially elliptical path, during the operation of the apparatus.

Such means for orienting the bottom of the foot includes a foot member for each reciprocating member. Each such foot member comprises at least one link which is pivotally connected proximal one end between the two ends of the reciprocating member, closest to the end that is being displaced along the floor. This additional linkage is restrained at its other end within the base portion of the frame permitting the second end of the link only to move substantially parallel with the floor or base as is the case for the first end of each reciprocating member.

The means for orienting the bottom of each foot of the user of the apparatus preferably allow a foot member platform which supports each foot to follow a substantially elliptical path while a reference plane for each foot platform, such as the foot contact surface, remains substantially parallel to the floor as that foot platform advances initially rearwardly from the forward end of the elliptical path along at least a portion of the lower half of the elliptical path. This serves to provide preferred anatomical movement of the ankles and feet. Additionally, the dimensions of the orienting means may be selected so that the reference plane for each foot platform remains substantially parallel with the floor as that foot platform advances along at least a portion the lower half of the substantially elliptical path.

In an advantageous embodiment, each linkage assembly includes an arm member or second link which is pivotally connected to the second end of the first link. The second link is then pivotally restrained to the top portion of the frame proximate its other end. This second link also provides for hand movement.

In an alternate embodiment, one end of each reciprocating member is adapted for linear movement substantially parallel with the floor. That end of each of the reciprocating member being linearly displaced may contact the base portion or may slide directly on the floor. Means are also included for orienting the bottom of the feet of the user through two foot platforms or foot pads so that each foot platform follows a predetermined substantially elliptical path while the foot platforms remain substantially parallel to a reference plane, such as the floor, through their revolution about the ellipse.

The more important features of the present invention have been summarized rather broadly in order that the detailed description may be better understood. There are, of course, additional features of the invention which will be described hereafter and which will also form the subject of the claims appended hereto.

### Brief Description of the Drawings

In order to more fully describe the drawings used in the detailed description of the present invention, a brief description of each drawing is provided
Fig. 1 is an elevation view of a first embodiment of the present invention.
Fig. 2 is a plan view of the first embodiment of the present invention.
Fig. 3 is an elevation view of an alternate embodiment of the present invention.
Fig. 4 is an elevation view of another alternate embodiment of the present invention.
Figs 5-9 canceled
Fig. 10 is an elevation view of another alternate embodiment of the present invention.
Fig. 11 is an elevation view of yet another alternate embodiment of the present invention.
Fig. 12 is an elevation view of yet a further alternate embodiment of the present invention.
Figs 13-15 canceled
Fig. 16 is an elevation view of yet another embodiment of the present invention.
Fig. 17 is a plan view of the embodiment of the present invention shown in Fig. 16.
Fig. 18 is an elevation view of the embodiment of the present invention shown in Figs. 16 and 17 and having arm members.
Fig. 19 is a detail view of a portion of the present invention shown in Figs. 16 and 17.
Fig. 20 is an elevation view of an alternate embodiment of the present invention.
Fig. 21 is an elevation view of the alternate embodiment of the present invention shown in Fig. 19 having arm members.
Fig. 22 is an elevation view of yet another alternate embodiment of the present invention.
Fig. 23 is an elevation view of a still further embodiment of the present invention.

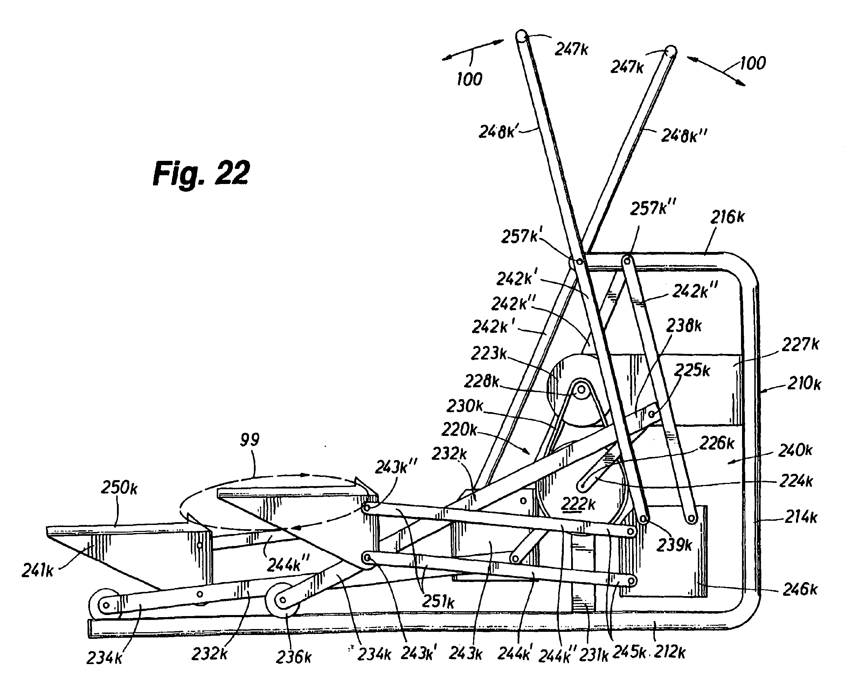

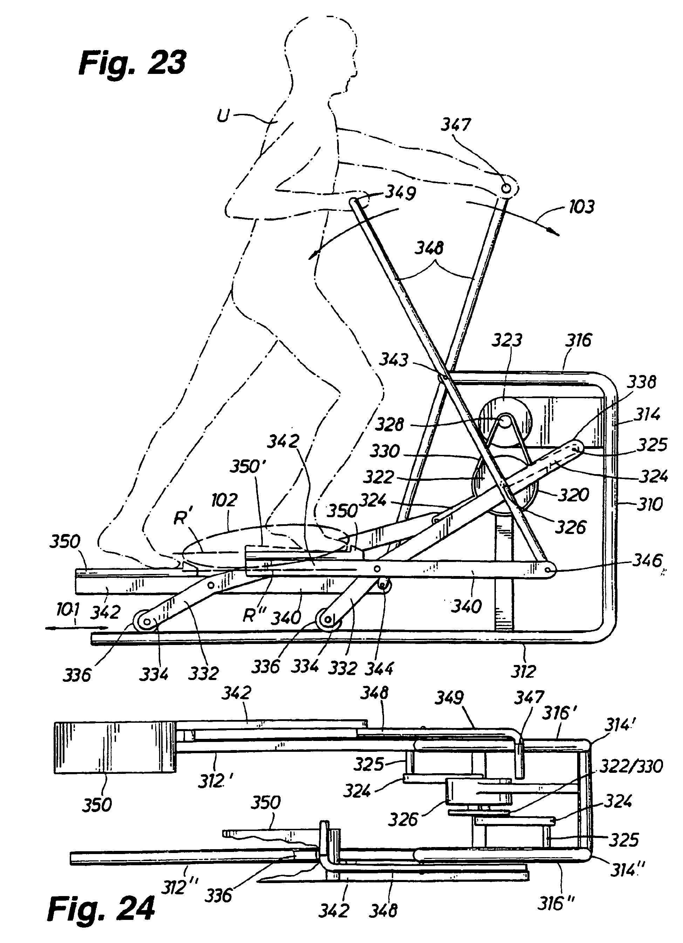

Fig. 22 is a plan view of the embodiment of the present invention as shown in Fig. 23.

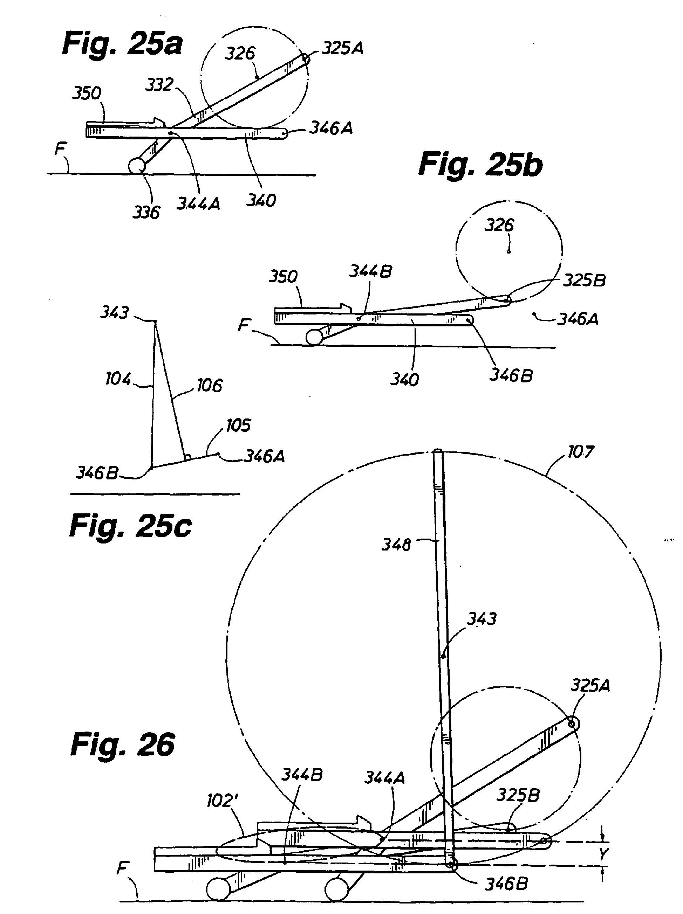

Figs. 25(a)-25(c) are sequential views of the geometric considerations of the present invention to provide for a two point control elliptical path.
Fig. 26 is an elevation view of the present invention showing the two point control elliptical path of the present invention.

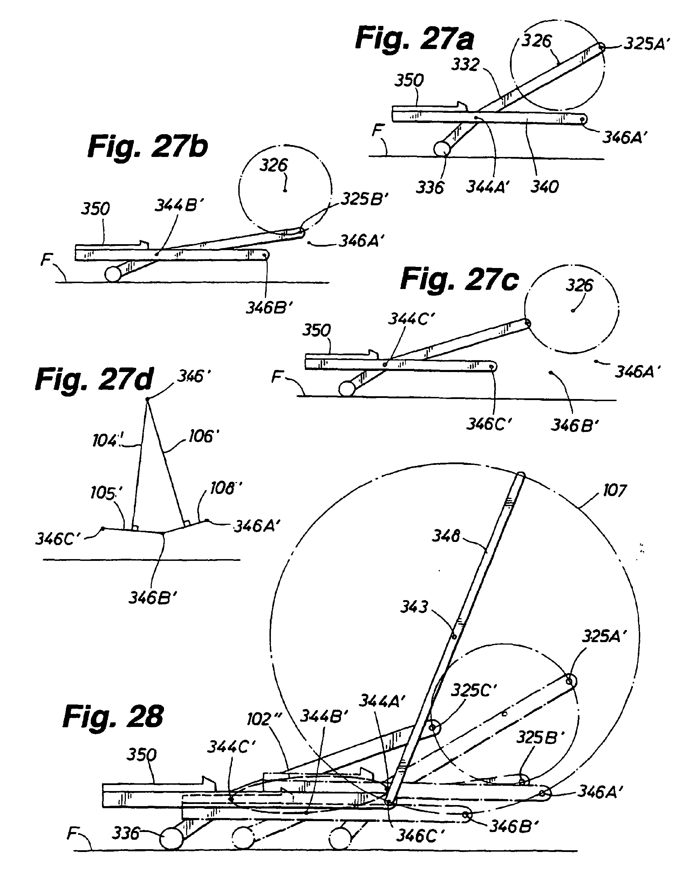

Figs. 27(a)-27(d) are sequential views of the geometric considerations of the present invention to provide for a three point control elliptical path.
Fig. 28 is an elevation view of the present invention showing the three point control elliptical path of the present invention.
Figs 29-33 canceled

### Detailed Description of Present Invention

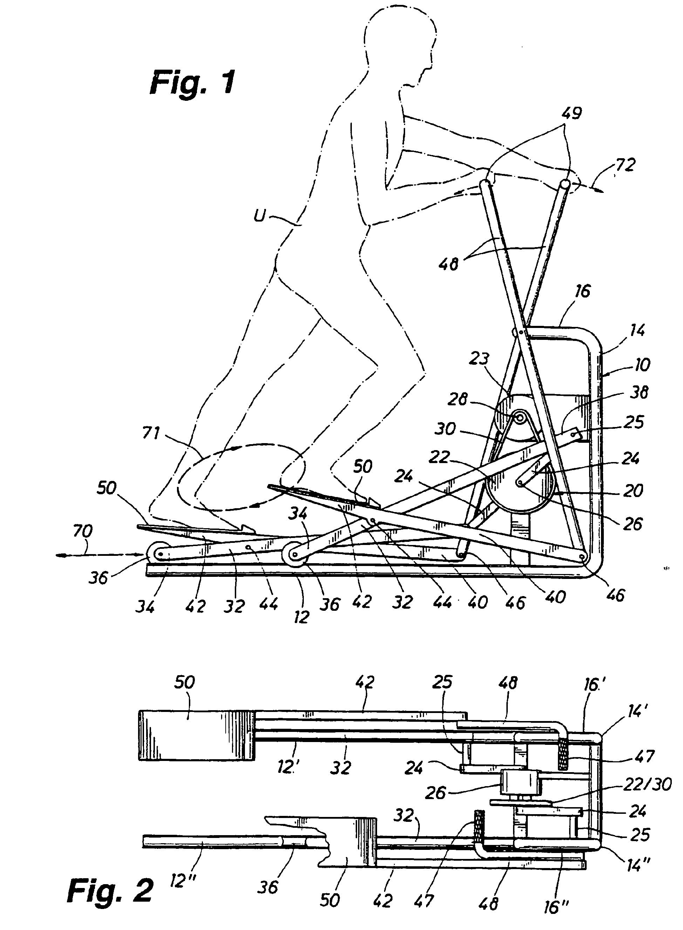

Referring to Figs. 1 and 2, a frame 10 is shown comprising a base portion 12, a mid portion 14, and a top portion 16. Referring briefly to Fig. 2, the frame 10 comprises two bottom portions 12' and 12'', two mid portions 14' and 14'', and two top portions 16' and 16''. In essence, the frame is comprised of two separate bents "'" and "''". Obviously, variations can be made to frame 10 as disclosed without departing from the spirit of the invention.

A coupling system 20 is fixed relative to the frame and comprises a pulley 22, crank members 24, resistant brake 23, sheave 28 and belt 30. Two reciprocating members 32 are positioned in the lower proximity of frame 10. Each reciprocating member 32 has one end 34 which is adapted to move laterally in a linear direction as shown in Fig. 1. A roller 36 is mounted at each end 34 of reciprocating member 32 and is adapted, as shown in Fig. 1, to ride on base portion 12 of frame 10. Alternatively, roller 36 may directly engage the floor, if desirable. The other end 38 of each reciprocating member 32 is pivotally connected to one end of a crank 24. The pivotal connection at end 38 may be through a pivotal connection member 25 (see Fig. 2) which extends between the other ends 38 of reciprocating members 32 and cranks 24. The other end of crank 24 is attached to pulley 22 at the pivot axis 26 of the coupling system 20. The pivot axis 26 is the axis about which pulley 22 rotates.

In the embodiment of Figs. 1 and 2, the present invention also includes two foot members, or contact members, 40. Each foot member 40 is pivotally attached proximate a first end 42 through a pinned connection 44 to the reciprocating arm 32. A foot pad 50 is attached to the top surface of each foot member 40 at its first end 42. Each foot member 40 is pivotally attached at its other end 46 to an arm member 48. Each arm member 48 is also pivotally attached proximal its other end to the top portion 16 of frame 10. A handle portion 47 (see Fig. 2) is included at the top end 49 of each hand member 48. Referring to Fig. 2, it can be easily seen that the frame 10 comprises dual base portions 12'/12'', mid portions 14'/14'' and top portions 16'/16''. Furthermore, it can be seen that reciprocating members 32, foot members 40 and arm members 48 provide identical dual systems; each system resting on a base portion 12' or 12'' of the frame and each arranged to accommodate one foot and one arm of the user.

In the operation of the embodiment of Figs. 1 and 2, and other embodiments describes hereafter, the user "U" can ascend the present invention from the back or the sides which facilitate its use. In some prior art disclosures ascending and descending is difficult and cumbersome due to the location of the pulleys and other structures. See, for example, U.S. Patent No. 5,242,343. However, in the case of the present invention it is easy to ascend and descend the device as there is a minimal amount of interference in the structure during exercise activity.

During operation, a climbing motion by the user results in the displacement of first ends 34 of each reciprocating member 32 in the direction of arrow 70. similarly, a circulating motion occurs at the second end 38 of each reciprocating member 32. However at points between the opposite ends 34 and 38 of each reciprocating member 32, the motion gradually changes from a circular motion (at ends 38) to a linear motion the ends 34. This geometric transition occurs in the form of an approximate ellipse. It is not a perfect elliptical shape; and it tends to be slightly more egg-shaped. However, it provides a more natural and rhythmic body movement.

It appears that the preferred location of pinned connection 44 relative to the length of the reciprocating member 32 is in that 1/3 portion closest to the first end 34 of each reciprocating member 32. It is in this range that the movement of each foot of the user follows an elliptical path (as shown by approximate ellipse 71) which is the more natural and comfortable geometric motion of the ankle and knees, minimizing stress on these joints yet permitting continued cardiovascular exercise. During operation, the upper end 49 of each arm member 48 moves in an arc as shown by arrow 72. Such permits hand/arm/shoulder movements for exercising the upper body muscle groups while continuing the cardiovascular exercise.

Resistant brake 23 of coupling system 20 operates in a manner well known to those skilled in the art. Resistant brake 23 serves to increase or decrease the load on the pulley through the sheave 28/belt 30 arrangement. Thus, resistant brake 23 serves to increase or decrease the extent of the cardiovascular workout.

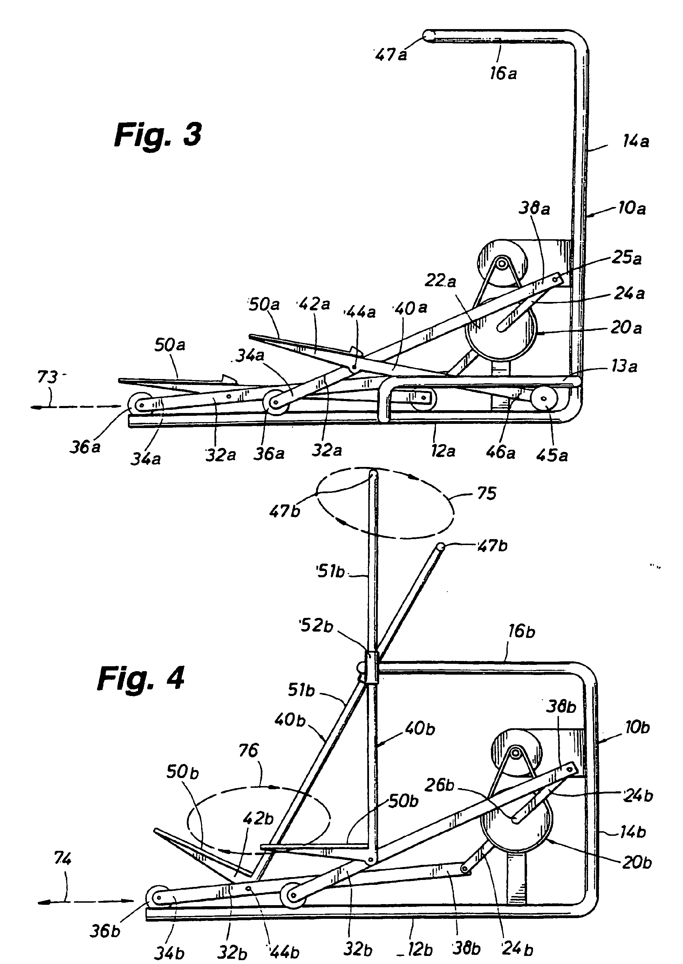

Referring now to Fig. 3, an alternate embodiment of the present invention is shown. Identical two-digit reference numerals will be used to designate similar structure found in the preferred embodiment but with an "a" series suffix. Frame 10a comprises a lower portion 12a, a mid portion 14a, and a top portion 16a. A coupling system 20a is included having identical components of the coupling system 20 described above for the preferred embodiment. Furthermore, coupling system 20a performs in an identical manner to coupling system 20 described above for the embodiment of Figs. 1 and 2.

A pair of reciprocating members 32a are also included, each having a first end 34a on which rollers 36a are mounted. The second end 38a of each reciprocating member 32a is pivotally connected via a pinned connection or pin member 25a to one end of each crank 24a. Again, two foot members 40a are included, each being pivotally connected proximate a first end 42a at pinned connection 44a to a corresponding reciprocating member 32a. Each foot member 40a also includes a foot pad 50a attached to the top surface of each foot member 40a at first end 42a. In this embodiment, however, a roller 45a is attached to each foot member 40a at its second end 46a. Each roller 45a engages a top bar 13a of frame 10a. Each top bar 13a is connected at one end to mid portion 14a of frame 10a and its other end to base portion 12a. In addition, the top portion 16a of each bent of frame 10a is connected by a bar 47a which is adapted to be held by the user during exercising to provide added stability.

In the operation of this alternate embodiment, the user ascends the device from the side or the rear with ease, places both feet on pads 50a, grabs bar 47a and begins a stair climbing motion. At that point, first ends 34a of each foot member 40a are placed in a linear manner in the direction of arrow 73, as in the case of the preferred embodiment. Similarly, as in the case of the preferred embodiment, ends 38a of each reciprocating member 32a move in a circular motion about pulley 22a. Again, the change from a linear movement of first ends 34a of reciprocating members 32a and a circular movement of second end 38a of reciprocating member 32a is an approximate ellipse of varying shape. In this alternate embodiment, the second end 46a of each foot member 40a is restrained also to move linearly in the direction of arrow 73. Each roller 45a is restrained from vertical movement by means of bar 13a. Thus, in this embodiment, the user does not employ an arm member as shown on the preferred embodiment. Rather, the user grabs the bar 47a for added stability.

Referring now to Fig. 4, another alternate embodiment of the present invention is shown. As before, similar parts will be designated by the same two-digit reference numeral as shown in the preferred embodiment but now with a "b" series suffix. Frame 10b again comprises a base portion 12b, a mid portion 14b and a top portion 16b. A coupler system 20b is also provided which is identical in structure and function to coupling system 20 of the preferred embodiment (Figs. 1-2). This alternate embodiment also includes a pair of reciprocating members 32b, each having a first end 34b which moves linearly in the direction of arrow 74 by means of rollers 36b. As in the case of the previous embodiments, rollers 36b are shown engaging bottom portion 12b of the frame; however, they may slide along the floor rather than the base of the frame. Similarly, each reciprocating member 32b includes a second end 38b pivotally attached to one end of a crank 24b. In this alternate embodiment two contact members 40b are included having a foot portion 50b angularly displaced from a longitudinal portion 51b. Each contact member 40b is pivotally connected at a first end 42b via pinned connection 44b to the reciprocating member 32b. This alternate embodiment also includes a sleeve 52b rotatably mounted to the top portion 16b of frame 10b. Each sleeve 52b serves to laterally restrain longitudinal member 51b of contact member 40b permitting only axial (or longitudinal) movement of member 51b relative to sleeve 52b and angular movement of member 51b relative to the top portion 16b of frame 10b.

In operation the user ascends the device from the side or the rear and begins the climbing motion using his feet engaging foot portions 50b. The upper portion of each longitudinal member 51b includes a handle portion 47b which can be grabbed by the user. As in the case of the previous embodiments, the climbing motion results in a lateral or linear displacement of first ends 34b of each reciprocating member 32b in the direction of arrow 74. However, movement of the user's hands via handle portions 47b is not in an arc as described above with respect to the preferred embodiment or stationary as in the case of the first alternate embodiment. Rather, the path which the hands of the user takes in this alternate embodiment follows a generally elliptical path 75 as do the feet (see approximate elliptical path 76). Thus, this embodiment provides a more extensive cardiovascular exercise in that both upper and lower body motion occurs in a more natural and rhythmic pattern minimizing excessive stress on the ankle, knee, elbow, and shoulder joints.

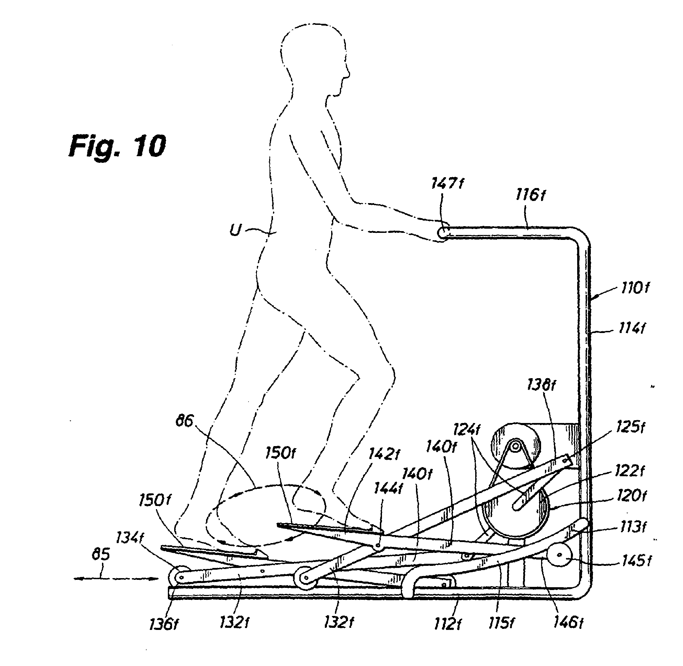

Referring now to Fig. 10, another alternate embodiment of the present invention is shown. For this embodiment, identical two-digit reference numerals are used to designate similar structure found in the preferred embodiments but with a 100 series prefix and a "f" series suffix. Frame 110f comprises a lower portion 112f, a mid portion 114f, and a top portion 116f. A coupling system 120f is included having identical components of the coupling system 20 described above for the preferred embodiment. Furthermore, coupling system 120f is included having identical components of the coupling system 20 described above for the preferred embodiment and performing in an identical manner to coupling systems 20 and 120 of the preferred embodiments.

A pair of reciprocating members 132f are also included, each having a first end 134f on which rollers 136f are mounted. The second end 138f of each reciprocating member 132f is pivotally connected via a pin member 125f to one end of each crank 124f. Two foot members 140f are included in this alternate embodiment, each being pivotally connected proximate a first end 142f at a pin connection 144f to a corresponding reciprocating member 132f. Each foot member 140f also includes a foot pad 150f attached to the top surface of each foot member 140f at first end 142f. In this embodiment, a roller 145f is attached to each foot member 140f at its second end 146f. Each roller 145f engages a bar 113f of each bent of frame 110f. Each bar 113f is connected at each end to frame 110f and includes an curved camming portion 115f. Thus, each bar 113f acts as a track to guide the second end 146f of each foot member 140f by means of a roller 145f. In addition, the top portion 116f of each bent of frame 110f includes a handle 147f adapted to be held by the user during exercising to provide stability.

In operation of this alternate embodiment, the user "U" ascends the device from the side or the rear with ease, places both feet on pads 150f, grabs bar 147f and begins a climbing motion. At that point, first ends 134f of each foot member 140f are displaced in a linear manner in the direction of arrow 85. Ends 138f of each reciprocating member 132f move in a circular motion about pulley 122f. The change from a linear movement at first ends 134f of reciprocating members 132f to a circular movement of second end 138f of reciprocating member 132f coupled with the influence of an arcuate movement of ends 146f of foot members 140f results in a generally flattened circular motion as shown by path 86.

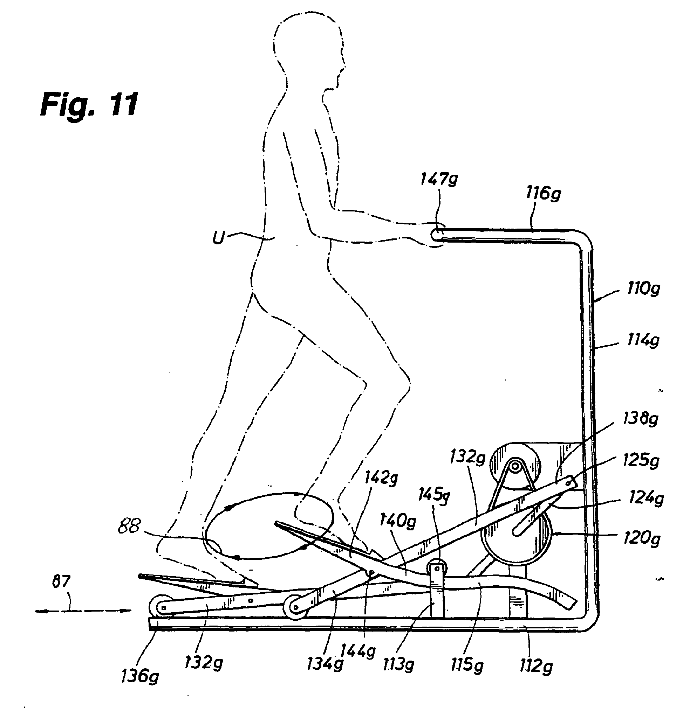

Referring now to Fig. 11, yet another alternate embodiment of the present invention is shown. As before, similar parts will be designated by the same two-digit reference numeral as shown in the preferred embodiment with a 100 series prefix, but now with a "g" suffix. Frame 110g comprises a base portion 112g, a mid portion 114g and a top portion 116g. A coupler system 120g is provided which is identical in structure and function to coupling system 20 of the preferred embodiment shown in Figs. 1 and 2. This alternate embodiment also includes a pair of reciprocating members 132g, each having a first end 134g which moves linearly in the direction of arrow 87 by means of rollers 136g. As in the case of the previous embodiments, rollers 136g are shown engaging bottom portion 112g of the frame; however, they may slide along the floor rather than the base of the frame. Similarly, each reciprocating member 132g includes a second end 138g pivotally attached to one end of a crank 124g. In this alternate embodiment two foot members 140g are included having a foot portion 150g. Each foot member 140g is pivotally connected at a pin connection 144g proximate a first end 142g of a foot member 140g to a corresponding reciprocating member 132g. Approximately ½ to ⅓ the length of each foot member 140g comprises a camming portion 115g, which may be curved as shown. A roller 145g, which is secured to base 112g by vertical member 113g, rides along the upper surface of the curved portion 115g of each foot member 140g during the operation of the present invention. Thus, each roller 145g serves to vertically restrain the curved portion 115g of each member 132g.

In the operation of this alternate embodiment, the user "U" ascends the device from the side or the rear grabs the handles 147g and begins a climbing motion. As the user begins the climbing motion, ends 134g of each reciprocating member move in a linear motion in the direction of arrow 87 and ends 138g of each reciprocating member 132g move in a generally circular motion. In view of the shaped or curved portion 115g of each foot member 140g, the lateral displacement of ends 134g of each reciprocating member and the circular motion at ends 138g, a predetermined closed path is defined preferably a flattened circular profile 88 as shown.

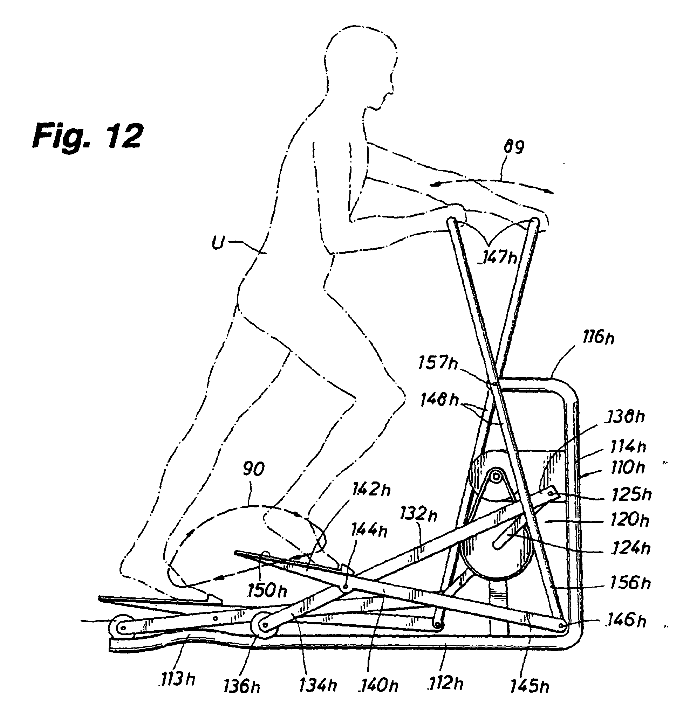

Referring now to Fig. 12. yet another alternate embodiment of the present invention is shown. As before, similar parts will be designated by the same two digit reference numeral as shown in the previously described alternate preferred embodiment, with a 100 series prefix, and an "h" suffix. Frame 110h again comprises a base portion 112h, a mid portion 114h and a top portion 116h. A coupling system 120h is also provided which is identical in structure and function to the coupling system 20 of the embodiment of Figs. 1 and 2. This alternate embodiment also includes a pair of reciprocating members 132h, each having a first end 134h which moves along the base 112h in a generally linear direction on rollers 136h. In this alternate embodiment, a portion of the base 112h includes a curved profile 113h proximate that portion of the base in contact with rollers 136h of reciprocating members 132h. Each reciprocating member 132h includes a second end 138h pivotally attached to one end of a crank 124h. Again in this alternate embodiment, two foot members 140h are included having a foot portion 150h. Each foot member 140h is pivotally connected at a pin connection 144h proximate a first end 142h of a foot member 140h. The other end 145h of each foot member 140h is pivotally connected to an arm member 148h. One end 156h of arm member 148h is attached at the pivotal connection 146h while the arm member 148h is pivotally restrained proximate its other end at a pivotal connection 157h to the top portion 116h of frame 110h. Each arm is pivotally connected at connection 157h to the top portion 116h of frame 110h. A handle portion 147h is included at one end of each arm member 148h.

Thus, in the operation of the embodiment shown in Fig. 12, the user "U" ascends the apparatus and begins a climbing motion by exerting pressure on pads 150h and by beginning an oscillating motion of handles 147h of arm members 148h in the direction of arrow 89. In this manner, the movement of the feet on foot pads 150h move in a predetermined closed path 90. The curved portion 113h of each bent of base portion 112h act as a camming surface and influences the closed profile of closed path 90. That is, the curved portions 113h serve to flatten the lower portion of path 90 so that it more accurately resembles a walking motion. Concurrently, the user is oscillating handles 147h in the direction of arrow 89 thereby achieving an enhanced cardiovascular exercise. As a result, muscle groups of the upper body are exercised as a result of the oscillating motion of arm members 148h.

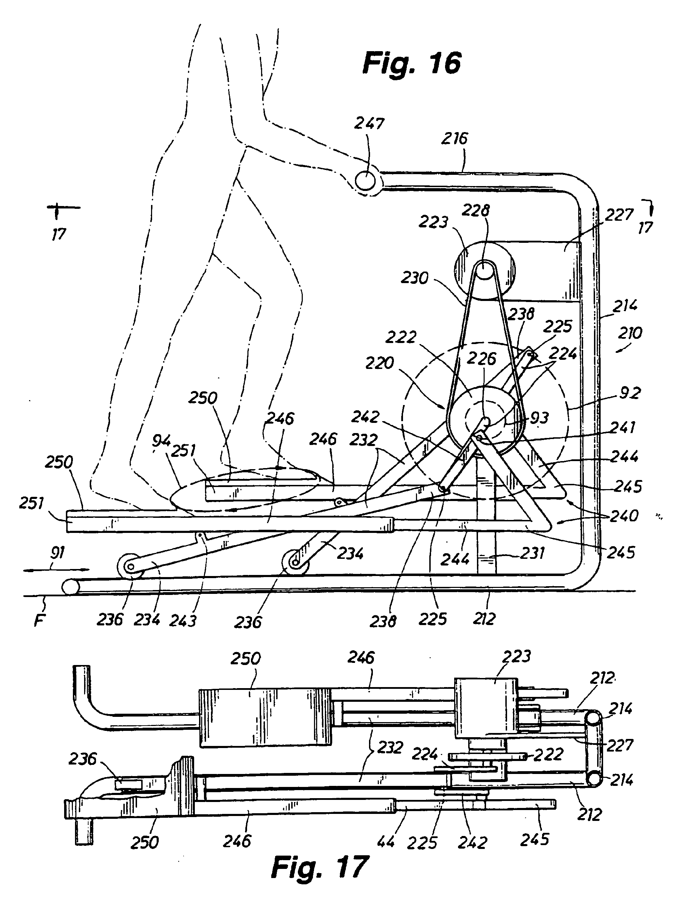

Referring now to the embodiment of Figs. 16 and 17, it will be seen that identical two-digit reference numerals are used to designate similar structures to reference numerals utilized above, with the addition of a 200 series prefix. A frame 210 is shown comprising a base portion 212, a mid portion 214, and a top portion 216. Referring briefly to Fig. 17, the frame 210 comprises two bottom portions 212' and 212'', two mid portions 214' and 214'', and two top portions (not shown). In essence, the frame is comprised of two separate bents "'" and "''". Obviously, variations can be made to frame 210 as disclosed without departing from the spirit of the invention.

A coupling system 220 is fixed relative to the frame and comprises a pulley 222, crank members 224, resistant brake 223, sheave 228 and belt 230. Two reciprocating members 232 are positioned in the lower proximity of frame 210. Each reciprocating member 232 has one end 234 which is adapted to move laterally in a linear direction as shown in Fig. 16 by arrow 91. A roller 236 is mounted at each end 234 of reciprocating member 232 and is adapted, as shown in Fig. 16, to ride on base portion 212 of frame 210. Alternatively, roller 236 may directly engage the floor, if desirable. The other end 238 of each reciprocating member 232 is pivotally connected to one end of a crank 224. The pivotal connection at end 238 may be through a journal member 225 (see Fig. 17) which extends from the end of crank 224 through an aperture in end 238 of each reciprocating member 232 and attaches to one end of a link 242 of linkage assembly 240 as discussed below. The other end of crank 224 is attached to pulley 222 at pivot axis 226 of coupling system 220. Pulley 222 revolves about axis 226. The preferred embodiment may include a handle portion 247 which is an integral part of top portion 216 of frame 210.

The embodiment of Fig. 16 includes duplicative linkage assemblies 240. Each linkage assembly 240 comprises two primary links 242 and 244. Link 242 is fixed at one end to journal member 225 and is pivotally connected at its other end 241 to link 244. Link 244 comprises two portions -- a bent portion 245 and a telescoping portion 246. One end of bent portion 245 reciprocates within telescoping portion 246. A foot platform or foot pad 250 is attached to telescoping portion 246 of link 244 proximate end 251 of link 244.

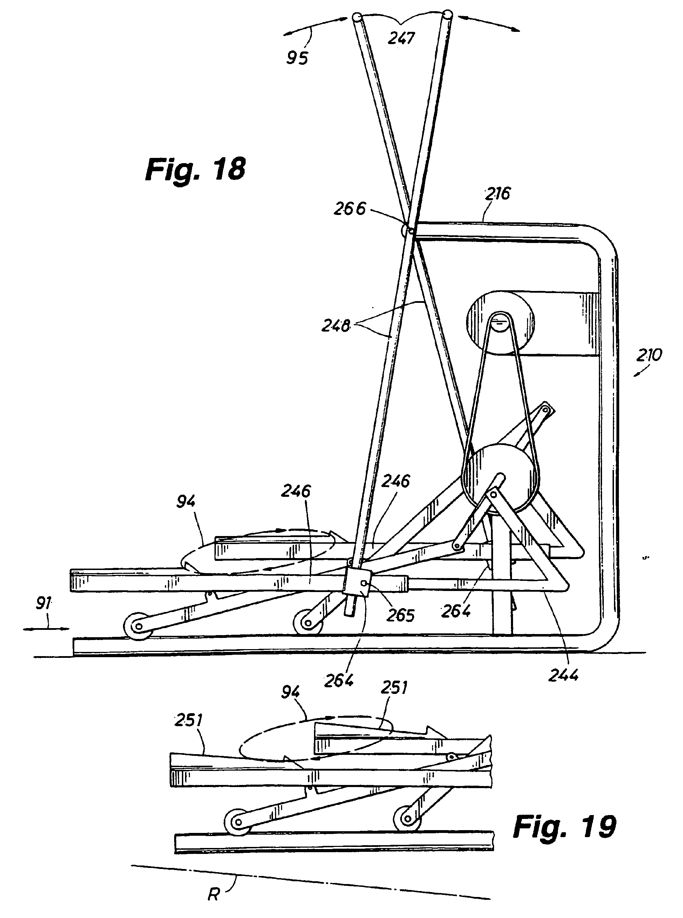

Referring to Fig. 18, the embodiment shown in Fig. 16 is reproduced but includes arm members 248. Each arm member includes a handle portion 247 which is gripped by the user during the operation of the apparatus. The other end of each arm member 248 reciprocates within a sleeve 264. Sleeve 264 is pivotally attached to telescoping portion 246 through pivot point 265. Each arm member 248 is pivotally connected a pivot point 266 to the top portion 216 of frame 210. During operation of the apparatus, arm member 248 pivots about point 266 and thereby slides vertically relative to sleeve 264 as link 244 revolves in accordance with the present invention as described below.

In the operation of the embodiment shown in Figs. 16-18, the user "U" ascends the present invention from the back or the sides which facilitate its use. In some prior art disclosures, ascending and descending is difficult and cumbersome due to the location of the pulleys and of the structure. However, in the case of the present invention it is easy to ascend and descend as there is a minimal amount of interference in the structure during exercise activity.

During operation, a climbing motion by the user results in the displacement of first ends 234 of each reciprocating member 232 in the direction of arrow 91. Similarly, a circular motion occurs at the second end 238 of each reciprocating member 232 as shown in phantom by circle 92. At points between the ends 234 and 238 of each reciprocating member 232, the motion gradually changes from a circular motion (at ends 238) to a linear motion at ends 234. This geometric transition occurs in the form of an approximate ellipse. It is not a perfect elliptical shape; it tends to be slightly more egg-shaped. However, it provides a more natural and rhythmic body movement.

Additionally, the circular movement of journal member 225 results in a similar circular motion of the outer end of links 242 since each crank 224 and link 242 are fixed relative to one another through journal member 225. This causes pivot connection 241 to rotate in a circle about axis 26 as shown in phantom as circle 93. Thus, two concurrently circular motions occur as shown by circles 93 and 92. Such dual circular motion translates to a substantially elliptical shape as shown by ellipse 94 at foot platforms 250 yet permits each foot platform 250 to remain substantially parallel with a reference plane, which in the case of Fig. 16 is shown as the floor "F" or base portion 212, during such elliptical movement of foot platform 250. Obviously, foot platform 250 may be initially oriented at an angle relative to a reference plane other than the floor by bending the end of portion 246 or including a wedge under each platform 250. In either event, the present invention still provides that the foot platforms 250 remains substantially parallel to a reference plane "R" as shown in Fig. 19.

Referring to Fig. 18, while the user displaces the foot platforms in a substantially elliptical shape, the arms are used to oscillate handle portions 247 in an arcuate path as shown by arrow 95. The arc of arrow 95 is defined by the radius of a circle extending from pivot point 265 to handle portions 247.

Referring still to Figs. 16-18, resistance brake 223 of coupling system 220 operates in a manner well-known to those skilled in the art. Resistant brake 223 serves to increase or decrease the load on the pulley through the sheave point 228/belt 230 arrangement. Coupling system 220 is secured to base portion 212 of frame 210 through plate 231. Similarly, resistant brake 223 is secured to mid portion 214 of frame 210 through bracket 227.

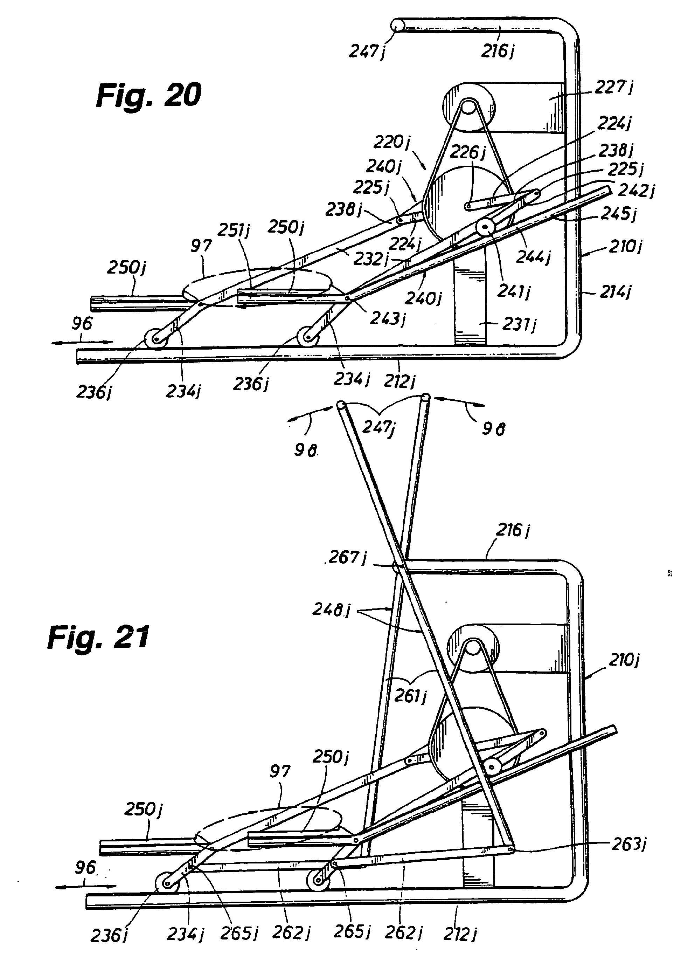

Referring to Figs. 20 and 21, another alternate embodiment of the present invention is shown. When possible, identical two-digit reference numerals will be used to designate similar structure found in the preferred embodiments previously described, but with a 200 series prefix and a "j" suffix. Frame 210j comprises a base portion 212j, a mid portion 214j, and a top portion 216j. A coupling system 220j is included having identical components of the coupling system 220 described above. Furthermore, coupling system 220j performs in an identical manner to coupling system 220 described above.

A pair of reciprocating members 232j are also included, each having a first end 234j on which rollers 236j are mounted. The second end 238j of each reciprocating member 232j is pivotally connected via a journal member 225j to one end of each crank 224j. Again, two linkage assemblies 240j are included, each having a first link 242j and a second link 244j. Each link 244j supports a foot platform 250j over end 251j. Additionally, each link 244 is pivotally connected, preferably in front of foot platform 250j to a reciprocating member 232j proximal end 234j at connection 243j.

Link 242j is fixed at one end to journal member 225j. Thus, each link 242j is fixed relative to corresponding crank member 224j. The other end of each link 242j includes a roller 241j which engages portion 245j of link 244j. A handle portion 247j is available to be gripped by the user.

Referring to Fig. 21, the alternate embodiment previously shown in Fig. 20 is depicted with arm members 248j. Each arm member 248j includes two links 261k and 262j. Link 261j is pivotally connected at pivot connection 257j to top portion 216j of frame 210j. The other end of each link 261j is pivotally connected at connection 246j to one end of link 262j. The other end of link 262j is pivotally connected at pivot point 265j to end 234j of a reciprocating member 232j. Each link 261j includes a handle portion 247j which the operator grips during operation of the apparatus.

In the operation of the alternate embodiment as shown in Fig. 20 and 21, the user ascends the device from the side or the rear with ease, places both feet on foot platforms 250j grabs handle portions 247j and begins a climbing motion. At that point, first end 234j of each reciprocating member 232j is displaced in a linear manner in the direction of arrow 96. Similarly, as in the case of the preferred embodiment, end 238j of each reciprocating member 232j moves in a circular motion about axis 226j as shown in phantom by circle 92 (see Fig. 16). Again, the change from a linear movement at ends 234j of reciprocating members 232j to a circular movement at ends 238j of reciprocating member 232j is an approximate ellipse of varying shape depending on its location along the length of reciprocating member 232j. As in the case of the preferred embodiment, as journal member 225j revolves in a circular path as shown by circle 94 (Fig. 16) about axis 226, roller 241 revolves in a circular path about axis 226 as shown in phantom line by circle 93 (see Fig. 16). This serves to provide for a substantially elliptical path for foot platform 250j yet provides that platform 250j will remain substantially parallel with the floor "F" or other reference plane as described above with respect to Figs. 16 and 19.

Referring now to the operation of the alternate embodiment including arm members as shown in Fig. 21, the operation of the hands through arcuate path 98 is facilitated by the reciprocating motion of rollers 236j along base portion 212j. Such lateral movement in the direction of arrow 96 serves to laterally displace pivot connection 265j which, through links 261j and 262j, oscillates handle portion 247j in an arcuate path 98. The radius of arcuate path 98 is determined by the distance from the handles to pivot connection 246j which defines the radius of the circle of the arcuate path 98.

Referring to Fig. 22, another alternate embodiment is shown. As in the case of the previous embodiments, similar structure will be referred to with the same two-digit reference numeral when possible but with a 200 series prefix and an "k" suffix.

Frame 210k comprises a base portion 212k, a mid portion 214k and a top portion 216k. A coupler system 220k is shown which includes the same components and functions identical with the coupling system 220 of the alternate preferred embodiment. Two reciprocating members 232k are included, each having a first end 234k to which a roller 236k is attached. The other end 238k of each reciprocating member 232k is pivotally connected to one end of a crank 224k of coupling system 220k. This present alternate embodiment includes two identical link assemblies 240k. Each link assembly 240k includes two pairs links 242k'/242k'' and 244k'/244k''. As shown, link 242k' is pivotally mounted parallel with link 242k'', and link 244k' is pivotally mounted parallel to link 244k''. A foot platform pedal structure 241k is pivotally attached to ends 239k of links 244k'/244k'' at pivot connections 243k'/243k''. Foot platform pedal 242 is also pivotally attached to end 234k reciprocating member 232k through pivoted connection 243k'. Links 244k'/k'' are pivotally connected at ends 245k to a pivot plate 246k. Links 244k'/244k'' are pivotally connected at one end through pivot connections 239k to pivot plate 246k. The other end of link 242k'' is pivotally connected at pivot point 257k'' to top portion 216k of frame 210k. Link 242k' is pivotally connected through pivot connection 257k to the top portion 216k of frame 210k as well. However, the connection at 257k' is not the upper end of link 257k'. Rather, as shown, link 248k extends upwardly therefrom and includes a handle portion 247k at its opposite end which is used by the operator. Each foot platform pedal 241k includes a foot platform 250k on which the user places his foot during operation of the apparatus.

As in the case of the previous embodiments, this alternate embodiment includes a resistant brake 223k which serves to increase or decrease the load on the pulley 222k of coupling system 220k through the sheave 228k/belt 230k arrangement. Resistant brake 223k in combination with the sheave 228k/belt 230k arrangement operates in the identical manner to resistant brake 23 and sheave 28/belt 30 of the preferred embodiment as discussed above. As shown, coupling system 220k is mounted to base portion 212k by a plate 231k. Similarly, resistant brake 223k is mounted to mid portion 214k of frame 220k by a plate 227k.

In the operation of this alternate embodiment, the user ascends the device from the side or the rear and begins the climbing motion using foot platforms 250k. The user also grabs handle portions 247k and begins an oscillating motion. Since each link 242k' is pivotally connected at connection 257k', the handle portions define an accurate path as shown by arrow 100. During the climbing motion, foot platforms 250k define a substantially elliptical path as shown by path 99. In the operation of this embodiment, the movement of linkage assemblies 240k maintains foot platform 250k substantially parallel with the floor or other reference plane at all times while the foot platform revolves through elliptical path 99. As in the case of the alternate preferred embodiment and as shown in Figs. 16 and 18 and discussed above, the shape of each pedal may be selected to orient each platform 250k and an acute angle relative to the floor but parallel to one another and a reference plane "R". Thus, in the operation of this embodiment, as each platform revolves in a substantially elliptical path but each such platform 250k remains substantially parallel to a reference plane as it revolves through path 302.

Each linkage assembly 240k comprises two parallelograms, the first defined by parallel links 242k'/242k'' top portion 216k between connections 257k'/257k'' and the pivot plate 246k between pivot connections 239k'/239k''. The second parallelogram is defined by links 244k'/244k'', foot platform pedal 241k and pivot plate 246k. As in the case of the previous embodiments, the climbing motion which the operator imposes on platforms 250k serves to revolve point 225k in a circular path about axis 226k. Linkage assemblies 240k serve to ensure that foot platforms 250k remain substantially parallel with the floor or a reference plane as it revolves in the predetermined substantially elliptical path 99.

Referring to Figs. 23 and 24, in yet another alternate preferred a frame 310 is shown comprising a base portion 312, a mid portion 314, and a top portion 316. Referring briefly to Fig. 24, the frame 310 comprises two bottom portions 312' and 312'', two mid portions 314' and 314'', and two top portions 316' and 316''. In essence, the frame is comprised of two separate bents "'" and "''". Obviously, variations can be made to frame 310 as disclosed without departing from the spirit of the invention.

A coupling system 320 is fixed relative to the frame and comprises a pulley 322, crank members 324, resistant brake 323, sheave 328 and belt 330. Two reciprocating members 332 are positioned in the lower proximity of frame 310. Each reciprocating member 332 has one end 334 which is adapted to move laterally in a linear direction as shown in Fig. 23. A roller 336 is mounted at each end 334 of reciprocating member 332 and is adapted, as shown in Fig. 24, to ride on base portion 32 of frame 30. Alternatively, roller 336 may directly engage the floor, if desirable. The other end 338 of each reciprocating member 332 is pivotally connected to one end of a crank 324. The pivotal connection at end 338 may be through a pivotal connection member 325 (see Fig. 24) which extends between the other ends 338 of reciprocating members 332 and cranks 324. The other end of crank 324 is attached to pulley 322 at the pivot axis 326 of the coupling system 320. The pivot axis 326 is the axis about which pulley 322 rotates.

The present invention also includes two foot members, or contact members, 340. Each foot member 340 is pivotally attached proximate a first end 342 through a pinned connection 344 to the reciprocating are 332. A foot platform 350 is attached to the top surface of each foot member 340 at its first end 342. A reference plane R' is shown as the top of each foot member. However, a reference plane may be defined within any fixed plane of each foot member 340 or foot platform 350 such as is shown, for example, by R''.

Each foot platform 350 has a top surface which the foot of the user contacts in the operation of the apparatus. Each foot member 340 is pivotally attached at its other end 346 to an arm member 348. Each arm member 348 is also pivotally attached proximal its other end to the top portion 316 of frame 310. A handle portion 347 is included at the top end 349 of each hand member e48.

Referring to Fig. 24, it can be easily seen that the frame 310 comprises dual base portions 312'/312'', mid portions 314'/314'' and top portions 316'/316''. Furthermore, it can be seen that reciprocating members 332, foot members 340, foot platforms 350 and arm members 348 provide identical dual systems; each system resting on a base portion 312' or 312'' of the frame and each arranged to accommodate one foot and one arm of the user.

In the operation of this alternate embodiment the user "U" can ascend the present invention from the back or the sides which facilitate its use. During operation the user places one foot on each foot platform 350 and begins a climbing motion which results in the displacement of first ends 34 of each reciprocating member 332 in the direction of arrow 101. Similarly, a circulating motion occurs at the second end 338 of each reciprocating member 332 about pivot axis 326. However at points between opposite ends 334 and 338 of each reciprocating member 332, the motion gradually changes from a circular motion (at ends 338) to a linear motion at ends 334. This geometric transition occurs in the form of an approximate elliptical path 102. It is not a perfect elliptical shape, and it tends to be slightly more egg-shaped. However, it provides a more natural and rhythmic body movement. Additionally, during operation, the upper end 349 of each arm member moves in an arc as shown by arrow 103. Resistant brake 323 of coupling system 320 operates in a manner well known to those skilled in the art. Resistant brake 323 serves to increase and decrease the load on the pulley through the sheave 328/belt 330 arrangement. Thus, resistant brake 323 serves to increase or decrease the extent of the cardiovascular workout. Such permits hand/arm/shoulder movements for exercising the upper body muscle group while continuing the cardiovascular exercise.

In addition to the revolution of the foot platform in a preferred substantially elliptical path as noted above, the present invention provides that a reference plane will remain parallel with the floor throughout at least a portion of the lower half of the elliptical path. If the reference plane is the top contact surface of the foot platform 350 which the user's foot engages, then the top surface of each foot platform will remain substantially parallel with the floor as that foot platform advances initially rearwardly proximate the forward end of the elliptical path along the lower half of the ellipse. It may be desirable to select a reference plane other than the top surface of the foot platform, such as R" in Fig. 23, if it is desirable to orient the top of the foot platform at a slight angle relative to the floor while the reference plane remains substantially parallel with the floor as the foot platform advances initially rearwardly through at least a portion of the lower half of the elliptical path from the forward end of the elliptical path. The orientation of the top of the foot platform at a slight angle as noted above is shown by phantom line 350' in Fig. 23.

To further understand the operation of the present invention, it may be helpful to describe the creation of the preferred elliptical path. The term "two point control" shall be used to describe the creation of the preferred elliptical path defined by two points. The two point control geometric configuration will provide for the orientation foi a reference plane (which in this example shall be the top surface of the foot platform 350) substantially parallel for that portion of the ellipse between the two points which define the path, which is a portion of the forward end of lower half of the elliptical path. As set forth herein, a geometric configuration is also provided for a "three point control" to define the elliptical path. The three point control configuration defines the lower half of an elliptical path wherein a reference plane (which again in this example shall be the top surface of the foot platform) remains substantially parallel with the floor between the three points, or the lower half of the elliptical path.

Referring now to Figs. 25(a)-25(c) and Fig. 26, the two point control system shall be described. With respect to Figs. 28(a)-25(c) and Fig. 25(a) in particular, a reciprocating member 332 and a foot member 340 are shown in the most forward position of what will be substantially elliptical path 102 of Fig. 23. This most forward position is defined by point 344A. In this position, second end of member 332 is point 325A which is on the circle about pivot axis 326.

The configuration of Fig. 25(a) is selected so that point 344A will be the most forward position on the elliptical path. In this configuration, foot member 340 is then oriented substantially parallel with floor F. This ensures that the top surface of foot platform 350 is also oriented substantially parallel with floor F. If a reference plane other than the top surface of foot platform 350 is selected, then the reference plane is oriented substantially parallel with the floor. Thus, a point 346A is defined in space at the second end of foot member 340. Concurrently, the second end of member 332, which is revolving around axis 326, defines a point 325A.

Referring now to Fig. 25(b), the second end of member 332 is rotated about axis 326 until foot member 340 is repositioned so that pivot point 344B defines the lowest point of the elliptical path. Since members 332 and 340 are pivotally connected at 344, this defines a point 325B of the circle generated by the second end of member 332 about axis 326 which also coincides with the lowest point of that circle. Once again, member 340 is oriented substantially parallel with floor F so that the top of foot platform 350 is also substantially parallel with floor F. Once again, if a reference plane other than the top surface of foot platform 350 is selected, then that reference plane is oriented substantially parallel with the floor. In this manner, the most forward point (344A) and the lowest point (344B) of the substantially elliptical path are defined.

Referring now to Fig. 25(c), points 346A and 346B are plotted which are used to define two points of a larger circle. This larger circle defines the relative location of member 348 with respect to foot member 340 and serves to ensure that while member 348 oscillates, the foot platform will remain substantially parallel with the floor through at least a portion of the forward end of the lower half of elliptical path. A vertical line 104 is projected upwardly from point 346B. Point 346B is selected for the vertical projection since the larger circle, defined by the rotation of arm members 348, is tangential to substantially elliptical path 102 at point 346B. Next, a line 105 is drawn connecting points 346A and 346B. A line 106 is then constructed form the midpoint of line 105 and perpendicular to line 105. The intersection of lines 104 and 106 defines the pivot point 343 for the connection of the arm member 348 to frame 310. Thus, this geometric configuration ensures that points 346A and 346B will move within the circle defined by the radius 104 and that elliptical path 102 has most forward point 344A and lowest point 344B. In this manner, the top surface of foot platform 350 will remain substantially parallel with floor F through at least the distance from points 344A to 344B of the lower half of substantially elliptical path 102 of Fig. 23. The construction of an elliptical path in accordance with the geometrical layout of Figs. 25(a) through 25(c) is shown in Fig. 26 and designated as elliptical path 102'. Thus, as the foot platform 350 revolves along elliptical path 102', each foot platform will remain substantially parallel with the floor as it advances initially rearwardly proximate the forward end of the elliptical path along a portion of the lower half of the elliptical path 102'.

Referring now to Fig. 26, it can be seen that the vertical distance between the most forward point 344A of elliptical path 102' and the lowest point 344B of elliptical path 102' defines a distance "Y" which also coincides with the vertical distance between points 346A and 346B along circle 107. Circle 104 also defines the oscillating motion of arms 348 which are gripped by the user and reciprocated during operation.

In this manner, two points are used to define a preferred elliptical path which ensures that the top portion of foot platform 350 will remain substantially parallel through at least a portion of the forward end of the lower half of the ellipse. This provides for preferred anatomical and ergonomical benefits during the exercise motion of the foot, ankle and knee as described herein.

Referring now to Figs. 27(a)-27(d) and Fig. 28, the three point control system will be used to describe the creation of a substantially elliptical path 102" which provides that the top of each foot platform 350 will remain substantially parallel with the floor F through substantially the lower half of the substantially elliptical path. As noted above, this example will be given in terms of each reference plane R' being the top of a foot platform 350. It may be desirable to use a reference plane for each linkage assembly other than the top of a foot platform. In any event, the application is the same as noted herein.

Referring to Fig. 27(a), foot member is first located in the most forward position of what will be elliptical path 102''. This defines a point 344A'. In this position, the second end of member 332, which is pivotally connected to member 340, defines a point 325A on the circle about pivot axis 326. In this most forward position, foot member 340 is once again oriented substantially parallel with floor F to ensure that the reference plane (the top of the foot platform) is oriented substantially parallel to the floor. Once again, if a reference lane other than the top surface of foot platform 350 is selected, then that reference plane is oriented substantially parallel with the floor. This defines a point 346A' at the second end of member 340. As noted earlier, this configuration also ensures that foot platform 350 will be substantially parallel with the floor at the forward position of substantially elliptical path 102''.

Referring to Fig. 27(b), reciprocating member 332 is then pivoted about pivot axis 326 to a second point which the designer may select to be proximate the mid axis of the ellipse, but its location is not critical other than orienting it proximate the mid portion of the lower half of the ellipse of what will be elliptical path 102''. This defines a point 344B' on elliptical path 102''. Once again, arm member 340 is oriented substantially parallel with the floor which defines point 46B' of the second end of member 340, and ensures that the top surface of foot platform 350 (or another previously defined reference plane) remains substantially parallel with the floor F.

Referring to Fig. 27(c), the second end of member 332 is then rotated about pivot axis 326 until member 340 is at the most rearward portion of the elliptical path 102'', ensuring that member 340 remains substantially parallel with the floor F. This defines a third point 344C' of the elliptical path 102'' and also a point 346C' in space for purposes of defining the relationship between arm member 348 and foot member 340.

Referring to Fig. 27(d), with points 344A' and 344B' and 344C' defined on the lower half of preferred substantially elliptical path 102'', points 346A', 346B' and 346C' are defined in space. With points 346A', 346B' and 346C' defined, line 108' is drawing connecting points 346A' and 346B', and line 105' is drawn connecting points 346B' and 346C'. A line 106' is then drawn perpendicular to line 108' at the midpoint of line 108'. Similarly, a line 104' is drawn perpendicular to line 105' at the midpoint of line 102'. Lines 104' and 106' intersect at point 346', which becomes the hinge point of the arm member 348 to frame 310 as shown in Fig. 23. This configuration will ensure that the pivotal connection of arm member 348 to foot member 340 at point 346 will remain on circle 107'' and will maintain foot member 340 in the preferred substantially elliptical path 102'' such that the top of foot platform 350 remains substantially parallel with the floor through at least the portion of elliptical path 102'' defined between points 344A and 344C., the lower half of path 102''. This configuration also ensures that handles 349 of each arm member 348 reciprocate in an oscillating path defined by arrows 104 of Fig. 23 which coincide with the arc of circle 104 of Fig. 26.

Further, it appears that the preferred location of pivotal connection 344 relative to the length of reciprocating member 332 is generally in that 1/3 portion closest to first end 334 of each reciprocating member 332. It is in this range that the movement of each foot of the user follows a more traditionally shaped elliptical path which is more natural and comfortable for the ankles and knees, minimizing stress on these joints yet permitting continued cardiovascular exercise.

An improved stationary exercising device is disclosed in the foregoing preferred and alternate embodiments which maximized cardiovascular exercise yet minimizes stress on critical joints. Obviously, modifications and alterations to the embodiments disclosed herein will be apparent to those skilled in the art in view of this disclosure. However, it is intended that all such variations and modifications fall within the scope of this invention as claimed.

## Claims

1. An exercising device comprising:
a frame (10) having a base portion (12) adapted to be supported by a floor;
a first linkage assembly having:
(i) a first reciprocating member (32); and
(ii) a first foot member (40), said first reciprocating member (32) having a first end (34) and a second end (38);
a second linkage assembly having:
(i) a second reciprocating member (32), and
(ii) a second foot member (40), said second reciprocating member (32) having a first end (34) and a second end (38);
a coupling member having a pulley (22) supported by said frame (10) defining a pivot axis (26); and
means on said pulley (22) for attaching said second ends (38, 38) of said first and second reciprocating members (32, 32) to said pulley (22) so that rotation of said pulley (22) results in the rotation of said second ends (38, 38) of said reciprocating members (32, 32) in a substantially circular path about said axis (26) while the first end (34) of each of said first and second reciprocating members (32, 32) distal said second end (38) of each said first and second reciprocating member (32) moves in a reciprocating pattern;
**characterized in that** said first foot member (40) is pivotally attached proximate a first end (42) to said first reciprocating member (32) between said first and second ends (34, 38), and
said second foot member (40) is pivotally attached proximate a first end (42) to said second reciprocating member (32) between said first and second ends (34, 38),
whereby each foot of the user of the device follows a substantially elliptical path.

2. The exercising device according to claim 1, **characterized in that** said means on said pulley (22) for attaching comprises:
a first element (24) attached at one end to said pulley (22) proximate said pivot axis (24) and at its other end to said second end (38) of said first reciprocating member (32); and
a second element (24) attached at one end to said pulley (22) proximate said pivot axis (24) and at its other end to said second end (38) of said second reciprocating member (32).

3. The exercising device according to claim 1, **characterized in that** each reciprocating member (32) includes means for enabling said first ends (34, 34) of said reciprocating members (32, 32) to contact said base portion (12).

4. The exercising device according to claim 1, **characterized in that** each said reciprocating member (32) includes means for enabling said first ends (34, 34) of said reciprocating members (32, 32) to contact the floor.

5. The exercising device according to claim 1, **characterized in that** said first end (34) of said first and second reciprocating members (232j, 232j) are adapted for linear motion substantially parallel with the floor, and that said first and second foot members (240j) include first and second foot platforms (250j, 250j) and corresponding first and second predetermined reference planes so that during operation of the device each said foot platform (250j) follows a substantially elliptical path having upper and lower halves and forward and rearward ends while said first predetermined reference plane remains substantially parallel with the floor as said first foot platform (250j) moves rearwardly proximate said forward end through at least a portion of the lower half of said elliptical path and said second predetermined reference plane remains substantially parallel with the floor as said second foot platform (250j) moves rearwardly proximate said forward end through at least a portion of the lower half of said elliptical path.

6. The exercising device according to claim 1, **characterized in that** the first foot member (40) is pivotally attached proximal its other end (46) to a first arm member (48), and the second foot member (40) is pivotally attached proximal its other end (46) to a second arm member (48), said first and second arm members (48, 48) being pivotally attached to said frame (10) distally from said coupling member, and said first and second arm members (48, 48) having a handle portion (47) proximate said pivotal connection to said frame (10) so that the user of said device may grip the handle portions (47, 47) during use of the device enabling a substantially arcuate movement of said handle portions.

## Patentansprüche

1. Übungsgerät, welches aufweist:
einen Rahmen (10), welcher einen Basisteil (12) aufweist, der geeignet ist, um von einem Boden gestützt zu werden;
eine erste Gestängeeinheit, welche aufweist:
i) einen ersten Gegenlaufteil (32); und
ii) einen ersten Fußteil (40), wobei der erste Gegenlaufteil (32) ein erstes Ende (34) und ein zweites Ende (38) aufweist;
eine zweite Gestängeeinheit, welche aufweist:
i) einen zweiten Gegenlaufteil (32); und
ii) einen zweite Fußteil (40), wobei der zweite Gegenlaufteil (32) ein erstes Ende (34) und ein zweites Ende (38) aufweist;
einen Verbindungsteil mit einer Rolle (22), die von dem Rahmen (10) getragen wird, wobei eine Drehachse (26) definiert wird; und
Mittel auf der Rolle (22), um die zweiten Enden (38, 38) der ersten und zweiten Gegenlaufteile (32, 32) an der Rolle (22) anzubringen, so dass eine Rotation der Rolle (22) zu einer Rotation der zweiten Enden (38, 38) der Gegenlaufteile (32, 32) in einer im Wesentlichen rundumlaufenden Bahn um besagte Achse (26) führt, während das erste Ende (34) von jedem der besagten ersten und zweiten Gegenlaufteile (32, 32), welches Fern von dem zweiten Ende (38) von jedem des besagten ersten und zweiten Gegenlaufteils (32, 32) ist, sich in einem gegenläufigen Muster bewegt;
**dadurch gekennzeichnet, dass** der erste Fußteil (40) nahe einem ersten Ende (42) an den ersten Gegenlaufteil (32) zwischen besagten ersten und zweiten Enden (34, 38) schwenkbar angebracht ist, und
der zweite Fußteil (40) nahe einem ersten Ende (42) an den zweiten Gegenlaufteil (32) zwischen besagten ersten und zweiten Enden (34, 38) schwenkbar angebracht ist,
wobei jeder Fuß des Gerätebenutzers einer im Wesentlichen elliptischen Bahn folgt.

2. Übungsgerät nach Anspruch 1, **dadurch gekennzeichnet, dass** die Mittel zum Anbringen auf der Rolle (22) aufweisen:
ein erstes Element (24), das an einem Ende an der Rolle (22) nahe der Drehachse (24), und an seinem anderen Ende an das zweite Ende (38) des ersten Gegenlaufteils (32) angebracht ist; und
ein zweites Element (24), das an einem Ende an der Rolle (22) nahe der Drehachse (24), und an seinem anderen Ende an das zweite Ende (38) des zweiten Gegenlaufteils (32) angebracht ist.

3. Übungsgerät nach Anspruch 1, **dadurch gekennzeichnet, dass** jeder Gegenlaufteil (32) Mittel enthält, um den ersten Enden (34, 34) der Gegenlaufteile (32, 32) zu ermöglichen, den Basisteil (12) zu berühren.

4. Übungsgerät nach Anspruch 1, **dadurch gekennzeichnet, dass** jeder Gegenlaufteil (32) Mittel enthält, um den ersten Enden (34, 34) der Gegenlaufteile (32, 32) zu ermöglichen, den Boden zu berühren.

5. Übungsgerät nach Anspruch 1, **dadurch gekennzeichnet, dass** das erste Ende (34) der ersten und zweiten Gegenlaufteile (232j, 232j) für eine lineare Bewegung im Wesentlichen parallel zum Boden geeignet sind, und die ersten und zweiten Fußteile (240j) erste und zweite Fußplattformen (250j, 250j) und entsprechende erste und zweite vorbestimmte Referenzebenen enthalten, sodass während des Betriebs des Geräts jede Fußplattform (250j) einer im Wesentlichen elliptischen Bahn folgt, welche obere und untere Hälften und vordere und hintere Enden aufweist, während die erste vorbestimmte Referenzebene im Wesentlichen parallel zum Boden bleibt, wenn die erste Fußplattform (250j) sich nahe dem vorderen Ende durch zumindest einen Teil der unteren Hälfte der elliptischen Bahn nach rückwärts bewegt, und die zweite vorbestimmte Referenzebene im Wesentlichen parallel zum Boden bleibt, wenn die zweite Fußplattform (250j) sich nahe dem vorderen Ende durch zumindest einen Teil der unteren Hälfte der elliptischen Bahn nach rückwärts bewegt.

6. Übungsgerät nach Anspruch 1, **dadurch gekennzeichnet, dass** der erste Fußteil (40) nahe seinem anderen Ende (46) schwenkbar an einen ersten Armteil (48) angebracht ist, und der zweite Fußteil (40) nahe seinem anderen Ende (46) schwenkbar an einen zweiten Armteil (48) angebracht ist, wobei die ersten und zweiten Armteile (48, 48) fern von dem Verbindungsteil schwenkbar an den Rahmen (10) angebracht sind, und wobei die ersten und zweiten Armteile (48, 48) nahe der schwenkbaren Verbindung zu dem Rahmen (10) einen Griffteil (47) aufweisen, sodass der Benutzer des Geräts die Griffteile (47, 47) während der Benutzung des Geräts ergreifen kann, wobei eine im Wesentlichen bogenförmige Bewegung der Griffteile ermöglicht wird.

## Revendications

1. Dispositif d'exercice comprenant :
un châssis (10) ayant une partie de base (12) adaptée pour être supportée par le sol ;
un premier assemblage de liaison ayant :
(i) un premier élément alternatif (32) ; et
(ii) un premier élément pour pied (40), ledit premier élément alternatif (32) ayant une première extrémité (34) et une deuxième extrémité (38) ;
un deuxième assemblage de liaison ayant :
(i) un deuxième élément alternatif (32), et
(ii) un deuxième élément pour pied (40), ledit deuxième élément alternatif (32) ayant une première extrémité (34) et une deuxième extrémité (38) ;
un élément de couplage ayant une poulie (22) supportée par ledit châssis (10) définissant un axe pivot (26) ; et
un moyen sur ladite poulie (22) pour attacher lesdites deuxièmes extrémités (38, 38) desdits premier et deuxième éléments alternatifs (32, 32) à ladite poulie (22) de sorte que la rotation de ladite poulie (22) engendre la rotation desdites deuxièmes extrémités (38, 38) desdits éléments alternatifs (32, 32) selon un trajet essentiellement circulaire autour dudit axe (26) tandis que la première extrémité (34) de chacun desdits premier et deuxième éléments alternatifs (32, 32) distante de ladite deuxième extrémité (38) de chacun desdits premier et deuxième éléments alternatifs (32) se déplace selon un schéma alternatif ;
**caractérisé en ce que** ledit premier élément pour pied (40) est attaché de manière à pouvoir pivoter à proximité d'une première extrémité (42) audit premier élément alternatif (32) entre lesdites première et deuxième extrémités (34, 38), et
**en ce que** ledit deuxième élément pour pied (40) est attaché de manière à pouvoir tourner à proximité d'une première extrémité (42) audit deuxième élément alternatif (32) entre lesdites première et deuxième extrémités (34, 38),
ce par quoi chaque pied de l'utilisateur du dispositif suit un trajet essentiellement elliptique.

2. Dispositif d'exercice selon la revendication 1, **caractérisé en ce que** ledit moyen sur ladite poulie (22) pour attacher comprend :
un premier élément (24) attaché à une première extrémité à ladite poulie (22) à proximité dudit axe pivot (24) et à son autre extrémité à ladite deuxième extrémité (38) dudit premier élément alternatif (32) ; et
un deuxième élément (24) attaché à une première extrémité à ladite poulie (22) à proximité dudit axe pivot (24) et à son autre extrémité à ladite deuxième extrémité (38) dudit deuxième élément alternatif (32).

3. Dispositif d'exercice selon la revendication 1, **caractérisé en ce que** chaque élément alternatif (32) inclut un moyen pour permettre auxdites premières extrémités (34, 34) desdits éléments alternatifs (32, 32) d'être en contact avec ladite partie de base (12).

4. Dispositif d'exercice selon la revendication 1, **caractérisé en ce que** chacun desdits éléments alternatifs (32) inclut un moyen pour permettre auxdites premières extrémités (34, 34) desdits éléments alternatifs (32, 32) d'être en contact avec le sol.

5. Dispositif d'exercice selon la revendication 1, **caractérisé en ce que** ladite première extrémité (34) desdits premier et deuxième éléments alternatifs (232j, 232j) est adaptée pour un mouvement linéaire essentiellement parallèle au sol, et que lesdits premier et deuxième éléments pour pied (240j) incluent des première et deuxième plateformes pour pied (250j, 250j) et des premier et deuxième plans de référence prédéterminés correspondants de sorte que pendant le fonctionnement du dispositif, chacune desdites plateformes pour pied (250j) suit un trajet essentiellement elliptique ayant des moitiés supérieure et inférieure et des extrémités avant et arrière tandis que ledit premier plan de référence prédéterminé reste essentiellement parallèle au sol pendant que ladite première plateforme pour pied (250j) se déplace vers l'arrière à proximité de ladite extrémité avant selon au moins une partie de la moitié inférieure dudit trajet elliptique et que ledit deuxième plan de référence prédéterminé reste essentiellement parallèle au sol pendant que la deuxième plateforme pour pied (250j) se déplace vers l'arrière à proximité de ladite extrémité avant selon au moins une partie de la moitié inférieure dudit trajet elliptique.

6. Dispositif d'exercice selon la revendication 1, **caractérisé en ce que** le premier élément pour pied (40) est attaché de manière à pouvoir pivoter à proximité de son autre extrémité (46) à un premier élément pour bras (48), et que le deuxième élément pour pied (40) est attaché de manière à pouvoir pivoter à proximité de son autre extrémité (46) à un deuxième élément pour bras (48), lesdits premier et deuxième éléments pour bras (48, 48) étant attachés de manière à pouvoir pivoter audit châssis (10) à distance dudit élément de couplage, et lesdits premier et deuxième éléments pour bras (48, 48) ayant une partie poignée (47) à proximité dudit raccordement pouvant pivoter audit châssis (10) de sorte que l'utilisateur dudit dispositif peut saisir les parties poignées (47, 47) pendant l'usage du dispositif permettant un mouvement essentiellement en forme d'arc desdites parties poignées.
